# EUROPÄISCHE PATENTSCHRIFT

(11) **EP 3 788 090 B1**
(45) Veröffentlichungstag und Bekanntmachung des Hinweises auf die Patenterteilung: **06.04.2022**
(21) Anmeldenummer: 19720639.4
(22) Anmeldetag: 02.05.2019
(51) Int. Cl.: C08G 18/76, C08G 18/79, C08G 18/02, C08G 18/16, C08G 101/00

(54) **VERFAHREN ZUR VERLÄNGERUNG DER STANDZEIT EINES REAKTORS MIT DESTILLATIONSEINRICHTUNG**
METHOD FOR INCREASING THE SERVICE LIFE OF A REACTOR WITH DISTILLATION DEVICE
PROCÉDÉ DE PROLONGATION DE DURÉE DE VIE D'UN RÉACTEUR POURVU DE DISPOSITIF DE DISTILLATION

(30) Priorität: 04.05.2018 EP 18170787
(43) Veröffentlichungstag der Anmeldung: 10.03.2021
(73) Patentinhaber: BASF SE, 67056 Ludwigshafen am Rhein (DE)
(72) Erfinder: SCHAEFER, Frank, 49448 Lemfoerde (DE); HAEBERLE, Karl, 67346 Speyer (DE); HENKE, Kai, 49448 Lemfoerde (DE); KAMINSKY, Torben, 49448 Lemförde (DE)
(74) Vertreter: BASF IP Association
(86) Internationale Anmeldenummer: PCT/EP2019/061190
(87) Internationale Veröffentlichungsnummer: WO 2019/211354

(56) Entgegenhaltungen:
- EP-A1- 0 628 541
- WO-A1-2014/044743

## Beschreibung

### TECHNISCHER HINTERGRUND

Die vorliegende Erfindung betrifft ein Verfahren zur Herstellung von Polycarbodiimiden.

### EINLEITUNG

Polycarbodiimiden sind bekannte Oligo- und Polymere die beispielsweise als Stabilisatoren zur Vermeidung von Hydrolyse in Kunststoffen eingesetzt werden. Diese werden durch Polymerisation von Diisocyanaten unter Decarboxylierung hergestellt, wobei jeweils zwei Isocyanatgruppen unter Abspaltung von CO₂ zu einer verbrückenden Carbodiimid-Einheit reagieren. Die weitere Polymerisation führt schließlich zu Oligomeren oder Polymeren mit einer Vielzahl an Carbodiimid Gruppen und terminalen Isocyanat Gruppen gemäß folgender Formel:

O=C=N-[R-N=C=N]*ₙ*R-N=C=O

wobei *n* typischerweise im Bereich von 1 bis 30 liegt.

Die Polymerisationsreaktion wird üblicherweise unter Einsatz eines Katalysators durchgeführt. Als Katalysator können Organophosphorverbindungen eingesetzt werden. Diese sind hochaktiv und erlauben eine schnelle Kondensationsreaktion unter vergleichsweise milden Bedingungen. So betrifft EP 0 628 541 A1 ein Verfahren zur Herstellung von Carbodiimiden und oligomeren Polycarbodiimiden aus 1,3-Bis-(1-methyl-1-isocyanato-ethyl)-benzol (TMXDI), wobei in den Beispielen beschrieben wird, dass TMXDI bis zu einem gewissen Umsatz zum Carbodiimid kondensiert wird und anschließend nicht verbrauchtes TMXDI abdestilliert wird.

WO 2014/044743 A1 beschreibt ein Verfahren zur Herstellung von Polycarbodiimiden, wobei während der Reaktion ein Inertgas kontinuierlich in die Reaktionslösung eingeleitet wird.

Bei der technischen Durchführung dieses Verfahrens stellt man fest, dass nach der Herstellung einer Anzahl von Ansätzen die nachgeschaltete Destillationsvorrichtung verstopft und keine weitere Synthese mehr möglich ist. Dies macht eine Reinigung der Destillationsvorrichtung notwendig. Diese Reinigung ist besonders aufwendig und gefährlich und erzeugt hohe Kosten durch Aufwand und Produktionsausfall.

Somit besteht trotz des bekannten Verfahrens des Standes der Technik das Bedürfnis nach einem wirtschaftlich effizienteren Verfahren zur Polymerisation von Carbodiimiden.

### DETAILLIERTE BESCHREIBUNG

Es bestand somit die Aufgabe ein verbessertes Verfahren zur Herstellung von Polycarbodiimiden bereitzustellen. Insbesondere bestand die Aufgabe darin ein Verfahren zur Herstellung von Polycarbodiimiden bereitzustellen, das eine höhere Wirtschaftlichkeit als die bekannten Verfahren des Standes der Technik aufweist, und zwar hinsichtlich der Standzeit des Reaktors. So wurde überraschenderweise festgestellt, dass das Nebenprodukt 1,3,5-Trimethylisocyanurat, welches im Kühler der verwendeten Destillationsvorrichtung auskristallisiert, durch das zur Polymerisation verwendete Diisocyanat gelöst und anschließend wieder auskristallisiert werden kann, unter Rückgewinnung des Diisocyanats. Insbesondere wurde überraschenderweise festgestellt, dass das Ausgangsprodukt des Reaktionsansatzes zur Reinigung des Kühlers verwendet werden kann, und danach auf einfache Art und Weise zurückgewonnen werden kann, ohne hierbei wesentlich verunreinigt zu werden. Somit wurde unerwarteterweise ein Verfahren gefunden, dass insbesondere ohne Hilfe von fremden Stoffen die sonst aufwändige Reinigung der Destillationsvorrichtung überflüssig macht oder wenigstens die Reinigungsintervalle deutlich verlängert, sodass die Standzeit des Reaktors wesentlich erhöht und die Effizienz der Produktion beträchtlich gesteigert wird.

Das erfindungsgemäße Verfahren zur Herstellung von Polycarbodiimiden umfasst:
(i) Herstellen eines Reaktionsgemisches umfassend einen Katalysator und ein Diisocyanat der Formel (I) 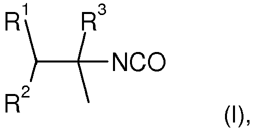 wobei unabhängig voneinander R¹, R² und R³ für H oder einen organischen Rest und einer von R¹, R² und R³ für einen Isocyanat-haltigen Rest R-NCO steht, wobei R für einen organischen Rest steht,
(ii) Polymerisieren des Diisocyanats zum Polycarbodiimid in einem Rührkessel durch Erhitzen des in (i) hergestellten Reaktionsgemisches unter Rühren auf eine Temperatur im Bereich von 20 bis 250 °C bei einem Druck im Bereich von 20 bis 800 mbar, und
(iii) Abtrennen des Katalysators aus der in (ii) erhaltenen Produktmischung durch Destillation der Produktmischung unter Erhalt eines Sumpfprodukts und eines Destillats, wobei das Sumpfprodukt das Polycarbodiimid und einen Teil des Katalysators, und das Destillat Diisocyanat der Formel (I) und einen weiteren Teil des Katalysators enthält,
   dadurch gekennzeichnet, dass das Nebenprodukt 1,3,5-Trimethylisocyanurat, welches im Kühler der verwendeten Destillationsvorrichtung auskristallisiert, aus dem Kühler entfernt wird durch
(iv) Spülen des Kühlers der Destillationsvorrichtung mit Diisocyanat der Formel (I) unter Erhalt einer 1,3,5-Trimethylisocyanurat und Diisocyanat enthaltenden Spülfraktion.

Hinsichtlich der Anzahl der Verfahrensschritte, wie zum Beispiel (i), (ii), (iii) und (iv) in der zuvor genannten Ausführungsform, besteht keine Einschränkung. Entsprechend kann das Verfahren weitere Verfahrensschritte umfassen, wie zum Beispiel (v), (vi) und (vii) in einer weiteren Ausführungsform. Weiterhin ist es möglich, dass ein Verfahrensschritt, wie zum Beispiel (iii), weitere Verfahrensschritte, wie zum Beispiel (iii.a), (iii.b) und (iii.c) in einer weiteren Ausführungsform, umfasst.

Außerdem können ein oder mehrere Verfahrensschritte mehrfach durchgeführt, beispielsweise können Schritte (i), (ii) und (iii) in dieser Reihenfolge mehrmals hintereinander durchgeführt werden bevor Schritt (iv) durchgeführt wird. Die bevorzugte Reihenfolge der Verfahrensschritte ist (i), (ii), (iii), (iv), wie in der in nachstehender Ausführungsform 1 definierten Reihenfolge, wobei besonders bevorzugt die Verfahrensschritte (v), (vi) und (vii), wie in der in nachstehender Ausführungsform 38 definierten Reihenfolge, in eben dieser Reihenfolge angeschlossen werden.

Hinsichtlich des Diisocyanats der Formel (I), welches gemäß (i) zum Herstellen des Reaktionsgemisches verwendet wird, besteht keine Einschränkung, sofern dieses die Substituenten R¹, R² und R³ umfasst, wobei unabhängig voneinander R¹, R² und R³ für H oder einen organischen Rest und eines von R¹, R² und R³ für einen Isocyanat-haltigen Rest R-NCO steht, wobei R für einen organischen Rest steht.

Hinsichtlich des Diisocyanats der Formel (I), sind zwei Alternativen bevorzugt. Gemäß der ersten Alternative stehen R¹, R² und R³ unabhängig voneinander für H oder eine optional verzweigte und/oder cyclische Alkyl-, Alkaryl- oder Aralkylgruppe, oder für eine Arylgruppe, besonders bevorzugt für H oder einen Rest ausgewählt aus der Gruppe bestehend aus linearen oder verzweigten C₁-C₁₅ Alkylgruppen, cycloaliphatischen C₅-C₂₀ Alkylgruppen, C₆-C₁₈ Arylgruppen, C₇-C₂₀ Aralkylgruppen, und C₇-C₂₀ Alkarylgruppen, weiter bevorzugt für H oder einen Rest ausgewählt aus der Gruppe bestehend aus linearen oder verzweigten C₁-C₈ Alkylgruppen, cycloaliphatischen C₅-C₁₀ Alkylgruppen, C₆-C₉ Arylgruppen, C₇-C₁₅ Aralkylgruppen, und C₇-C₁₅ Alkarylgruppen, und weiter bevorzugt für H oder einen Rest ausgewählt aus der Gruppe bestehend aus linearen oder verzweigten C₁-C₆ Alkylgruppen, cycloaliphatischen C₅-C₆ Alkylgruppen, C₆ Arylgruppen, C₇-C₁₂ Aralkylgruppen, und C₇-C₁₂ Alkarylgruppen.

Gemäß der zweiten Alternative stehen R¹ und R², oder R¹ und R³, oder R² und R³, bevorzugt R¹ und R², für H oder eine optional verzweigte und/oder cyclische Alkyl-, Alkaryl- oder Aralkylgruppe, oder für eine Arylgruppe, bevorzugt für H oder einen Rest ausgewählt aus der Gruppe bestehend aus linearen oder verzweigten C₁-C₁₅ Alkylgruppen, cycloaliphatischen C₅-C₂₀ Alkylgruppen, C₆-C₁₈ Arylgruppen, C₇-C₂₀ Aralkylgruppen, und C₇-C₂₀ Alkarylgruppen, weiter bevorzugt für H oder einen Rest ausgewählt aus der Gruppe bestehend aus linearen oder verzweigten C₁-C₈ Alkylgruppen, cycloaliphatischen C₅-C₁₀ Alkylgruppen, C₆-C₉ Arylgruppen, C₇-C₁₅ Aralkylgruppen, und C₇-C₁₅ Alkarylgruppen, weiter bevorzugt für H oder einen Rest ausgewählt aus der Gruppe bestehend aus linearen oder verzweigten C₁-C₆ Alkylgruppen, cycloaliphatischen C₅-C₆ Alkylgruppen, C₆ Arylgruppen, C₇-C₁₂ Aralkylgruppen, und C₇-C₁₂ Alkarylgruppen, weiter bevorzugt für H oder einen Rest ausgewählt aus der Gruppe bestehend aus linearen oder verzweigten C₁-C₆ Alkylgruppen, und cycloaliphatischen C₅-C₆ Alkylgruppen, weiter bevorzugt für H oder einen Rest ausgewählt aus der Gruppe bestehend aus linearen oder verzweigten C₁-C₄ Alkylgruppen, weiter bevorzugt für H oder einen Rest ausgewählt aus der Gruppe bestehend aus linearen oder verzweigten C₁-C₃ Alkylgruppen, weiter bevorzugt für H oder einen Rest ausgewählt aus der Gruppe bestehend aus C₁-C₂ Alkylgruppen, weiter bevorzugt für H, Methyl, oder Ethyl, weiter bevorzugt für H oder Methyl, und weiter bevorzugt für H.

Hinsichtlich der zuvor genannten zweiten Alternative zum Diisocyanat der Formel (I) ist es weiterhin bevorzugt, dass R³, R² oder R¹, davon bevorzugt R³, für den Isocyanat-haltigen organischen Rest R-NCO steht, wobei R für eine optional verzweigte und/oder cyclische Alkylen-, Alkarylen-, oder Aralkylengruppe, oder für eine Arylengruppe steht, bevorzugt für einen Rest ausgewählt aus der Gruppe bestehend aus linearen oder verzweigten C₁-C₁₅ Alkylengruppen, cycloaliphatischen C₅-C₂₀ Alkylengruppen, C₆-C₁₈ Arylengruppen, C₇-C₂₀ Aralkylengruppen, und C₇-C₂₀ Alkarylengruppen, weiter bevorzugt für einen Rest ausgewählt aus der Gruppe bestehend aus linearen oder verzweigten C₁-C₈ Alkylengruppen, cycloaliphatischen C₅-C₁₀ Alkylengruppen, C₆-C₉ Arylengruppen, C₇-C₁₅ Aralkylengruppen, und C₇-C₁₅ Alkarylengruppen, weiter bevorzugt für einen Rest ausgewählt aus der Gruppe bestehend aus linearen oder verzweigten C₁-C₆ Alkylengruppen, cycloaliphatischen C₅-C₆ Alkylengruppen, C₆ Arylengruppen, C₇-C₁₂ Aralkylengruppen, und C₇-C₁₂ Alkarylengruppen, weiter bevorzugt für einen Rest ausgewählt aus der Gruppe bestehend aus verzweigten C₃-C₆ Alkylengruppen, cycloaliphatischen C₅-C₆ Alkylengruppen, C₆ Arylengruppen, C₇-C₁₀ Aralkylengruppen, und C₇-C₁₀ Alkarylengruppen, weiter bevorzugt für einen Rest ausgewählt aus der Gruppe bestehend aus C₆ Arylengruppen, C₇-C₉ Aralkylengruppen, und C₇-C₉ Alkarylengruppen, weiter bevorzugt für einen Rest ausgewählt aus der Gruppe bestehend aus C₈-C₉ Aralkylengruppen, und C₈-C₉ Alkarylengruppen, wobei R³, R² oder R¹, bevorzugt R³, weiter bevorzugt für (1-Isocyanato-1-methyl-ethyl)phenylen, und weiter bevorzugt für 3-(1-Isocyanato-1-methyl-ethyl)phenylen steht.

Somit ist es hinsichtlich des Diisocyanats der Formel (I) besonders bevorzugt, dass R¹ und R² für H oder eine optional verzweigte und/oder cyclische Alkyl-, Alkaryl- oder Aralkylgruppe, oder für eine Arylgruppe stehen, bevorzugt für H oder einen Rest ausgewählt aus der Gruppe bestehend aus linearen oder verzweigten C₁-C₁₅ Alkylgruppen, cycloaliphatischen C₅-C₂₀ Alkylgruppen, C₆-C₁₈ Arylgruppen, C₇-C₂₀ Aralkylgruppen, und C₇-C₂₀ Alkarylgruppen, weiter bevorzugt für H oder einen Rest ausgewählt aus der Gruppe bestehend aus linearen oder verzweigten C₁-C₈ Alkylgruppen, cycloaliphatischen C₅-C₁₀ Alkylgruppen, C₆-C₉ Arylgruppen, C₇-C₁₅ Aralkylgruppen, und C₇-C₁₅ Alkarylgruppen, weiter bevorzugt für H oder einen Rest ausgewählt aus der Gruppe bestehend aus linearen oder verzweigten C₁-C₆ Alkylgruppen, cycloaliphatischen C₅-C₆ Alkylgruppen, C₆ Arylgruppen, C₇-C₁₂ Aralkylgruppen, und C₇-C₁₂ Alkarylgruppen, weiter bevorzugt für H oder einen Rest ausgewählt aus der Gruppe bestehend aus linearen oder verzweigten C₁-C₆ Alkylgruppen, und cycloaliphatischen C₅-C₆ Alkylgruppen, weiter bevorzugt für H oder einen Rest ausgewählt aus der Gruppe bestehend aus linearen oder verzweigten C₁-C₄ Alkylgruppen, weiter bevorzugt für H oder einen Rest ausgewählt aus der Gruppe bestehend aus linearen oder verzweigten C₁-C₃ Alkylgruppen, weiter bevorzugt für H oder einen Rest ausgewählt aus der Gruppe bestehend aus C₁-C₂ Alkylgruppen, weiter bevorzugt für H, Methyl, oder Ethyl, weiter bevorzugt für H oder Methyl, und weiter bevorzugt für H, sowie R³ für den Isocyanat-haltigen organischen Rest R-NCO steht, wobei R für eine optional verzweigte und/oder cyclische Alkylen-, Alkarylen-, oder Aralkylengruppe, oder für eine Arylengruppe steht, bevorzugt für einen Rest ausgewählt aus der Gruppe bestehend aus linearen oder verzweigten C₁-C₁₅ Alkylengruppen, cycloaliphatischen C₅-C₂₀ Alkylengruppen, C₆-C₁₈ Arylengruppen, C₇-C₂₀ Aralkylengruppen, und C₇-C₂₀ Alkarylengruppen, weiter bevorzugt für einen Rest ausgewählt aus der Gruppe bestehend aus linearen oder verzweigten C₁-C₈ Alkylengruppen, cycloaliphatischen C₅-C₁₀ Alkylengruppen, C₆-C₉ Arylengruppen, C₇-C₁₅ Aralkylengruppen, und C₇-C₁₅ Alkarylengruppen, weiter bevorzugt für einen Rest ausgewählt aus der Gruppe bestehend aus linearen oder verzweigten C₁-C₆ Alkylengruppen, cycloaliphatischen C₅-C₆ Alkylengruppen, C₆ Arylengruppen, C₇-C₁₂ Aralkylengruppen, und C₇-C₁₂ Alkarylengruppen, weiter bevorzugt für einen Rest ausgewählt aus der Gruppe bestehend aus verzweigten C₃-C₆ Alkylengruppen, cycloaliphatischen C₅-C₆ Alkylengruppen, C₆ Arylengruppen, C₇-C₁₀ Aralkylengruppen, und C₇-C₁₀ Alkarylengruppen, weiter bevorzugt für einen Rest ausgewählt aus der Gruppe bestehend aus C₆ Arylengruppen, C₇-C₉ Aralkylengruppen, und C₇-C₉ Alkarylengruppen, weiter bevorzugt für einen Rest ausgewählt aus der Gruppe bestehend aus C₈-C₉ Aralkylengruppen, und C₈-C₉ Alkarylengruppen, wobei R³ weiter bevorzugt für (1-Isocyanato-1-methyl-ethyl)phenylen, und weiter bevorzugt für 3-(1-Isocyanato-1-methyl-ethyl)phenylen steht.

Somit ist es hinsichtlich des Diisocyanats der Formel (I) besonders bevorzugt, dass R¹ und R² für H, Methyl, oder Ethyl stehen, weiter bevorzugt für H oder Methyl, und weiter bevorzugt für H, sowie R³ bevorzugt für (1-Isocyanato-1-methyl-ethyl)phenylen, und weiter bevorzugt für 3-(1-Isocyanato-1-methyl-ethyl)phenylen steht. Somit ist es hinsichtlich des Diisocyanats der Formel (I) insbesondere weiter bevorzugt, dass das Diisocyanat in (i) und/oder (iv), bevorzugt in (i) und (iv), (1,3-Bis(1-isocyanato-1-methyl-ethyl)benzol ist.

Hinsichtlich des Diisocyanats der Formel (I), welches zum Spülen des Kühlers der Destillationsvorrichtung mit Diisocyanat der Formel (I) gemäß (iv), unter Erhalt einer 1,3,5-Trimethylisocyanurat und Diisocyanat enthaltenden Spülfraktion, verwendet wird, besteht keine Einschränkung, so dass dieses nicht identisch sein muss mit dem Diisocyanat der Formel (I) in (i), bevorzugt ist dies jedoch der Fall. Weiterhin kann das zum Spülen des Kühlers der Destillationsvorrichtung verwendete Diisocyanat der Formel (I) mit weiteren Substanzen verdünnt sein, beispielsweise mit einem organischen Lösungsmittel, bevorzugt mit einem Lösungsmittel ausgewählt aus der Gruppe bestehend aus aromatischen Kohlenwasserstoffen, Amiden, halogenierten Kohlenwasserstoffen, Ether, cyclischen Carbonaten, und Mischungen davon, bevorzugt aus der Gruppe bestehend aus Toluol, Xylol, N-Methylpyrrolidon, Dimethylformamid, Dimethylacetamid, Dichlormethan, Chloroform, Dichlorethan, Tetrachlorethan, Tetrahydrofuran, Ethylencarbonat, Propylencarbonat, und Mischungen davon, oder anderen Substanzen, welche insbesondere im Verfahren zur Herstellung von Polycarbodiimiden gemäß Ausführungsform 1 eingesetzt werden. Dabei ist es bevorzugt, dass das Diisocyanat enthaltende Destillat aus (iii) zum Spülen in (iv) verwendet wird.

Hinsichtlich der Menge an Diisocyanat das zum Spülen in (iv) verwendet wird, besteht weiterhin keine Einschränkung, sofern eine Menge verwendet wird geeignet, um eine 1,3,5-Trimethylisocyanurat und Diisocyanat enthaltende Spülfraktion zu erhalten. Es ist bevorzugt, dass die Menge an Diisocyanat, welches zum Spülen in (iv) verwendet wird, 0,5 bis 100 Vol.-% des in (i) hergestellten Reaktionsgemisches entspricht, bevorzugt 1 bis 80 Vol.-%, weiter bevorzugt 2 bis 60 Vol.-%, weiter bevorzugt 5 bis 50 Vol.-%, weiter bevorzugt 10 bis 45 Vol.-%, weiter bevorzugt 15 bis 40 Vol.-%, weiter bevorzugt 20 bis 35 Vol.-%, und weiter bevorzugt 25 bis 30 Vol.-%.

Hinsichtlich der Dauer in der in (iv) der Kühler der Destillationsvorrichtung mit Diisocyanat gespült wird, besteht keine Einschränkung, sofern die Dauer gewählt wird geeignet, um eine 1,3,5-Trimethylisocyanurat und Diisocyanat enthaltende Spülfraktion zu erhalten. Es ist bevorzugt, dass in (iv) der Kühler der Destillationsvorrichtung mit Diisocyanat für eine Dauer von 0,5 min bis 2 h gespült wird, bevorzugt von 1 Minuten bis 1 h, weiter bevorzugt von 3 bis 45 min, weiter bevorzugt von 5 bis 30 min, weiter bevorzugt von 6 bis 20 min, weiter bevorzugt von 7 bis 15 min, und weiter bevorzugt von 8 bis 12 min.

Somit ist es hinsichtlich des Diisocyanats der Formel (I), welches zum Spülen des Kühlers der Destillationsvorrichtung mit Diisocyanat der Formel (I) gemäß (iv), unter Erhalt einer 1,3,5-Trimethylisocyanurat und Diisocyanat enthaltenden Spülfraktion, verwendet wird, insbesondere weiter bevorzugt, dass das Diisocyanat 1,3-Bis(1-isocyanato-1-methyl-ethyl)benzol (TMXDI) ist, und dass in (iv) der Kühler der Destillationsvorrichtung mit Diisocyanat für eine Dauer von 0,5 Minuten bis 2 h gespült wird, bevorzugt von 1 min bis 1 h, weiter bevorzugt von 3 bis 45 Minuten, weiter bevorzugt von 5 bis 30 min, weiter bevorzugt von 6 bis 20 min, weiter bevorzugt von 7 bis 15 min, und weiter bevorzugt von 8 bis 12 min.

Wie oben bereits offenbart, kann das Verfahren, insbesondere gemäß nachstehender Ausführungsform 1, weitere Verfahrensschritte umfassen. Bevorzugt umfasst das Verfahren, insbesondere nach einer der zuvor genannten Ausführungsformen und umfassend die Verfahrensschritte (i), (ii), (iii) und (iv) in eben dieser Reihenfolge, die weiteren Schritte (v) Auskristallisieren des 1,3,5-Trimethylisocyanurat aus der in (iv) erhaltenen Spülfraktion, (vi) Abtrennen des in (v) erhaltenen Feststoffs durch Dekantieren und/oder Filtrieren unter Erhalt des in (iv) verwendeten Diisocyanats, und (vii) Rückführen zumindest eines Teils, bevorzugt des ganzen in (vi) erhaltenen Diisocyanats in (i) für das Herstellen des Reaktionsgemisches. Dabei ist es bevorzugt, dass die weiteren Schritte (v), (vi) und (vii) in eben dieser Reihenfolge an die Verfahrensschritte (i), (ii), (iii) und (iv) angeschlossen werden.

Hinsichtlich der Temperatur des Diisocyanats der Formel (I), welches zum Spülen des Kühlers der Destillationsvorrichtung mit Diisocyanat der Formel (I) gemäß (iv), unter Erhalt einer 1,3,5-Trimethylisocyanurat und Diisocyanat enthaltenden Spülfraktion, verwendet wird, besteht keine Einschränkung. Bevorzugt weist das zum Spülen verwendete Diisocyanat der Formel (I) zumindest zu Beginn des Spülens des Kühlers eine Temperatur von 20 bis 250 °C auf, bevorzugt von 30 bis 220 °C, weiter bevorzugt von 40 bis 200 °C, weiter bevorzugt von 50 bis 180 °C, weiter bevorzugt von 60 bis 160 °C, weiter bevorzugt von 70 bis 150 °C, weiter bevorzugt von 80 bis 140 °C, weiter bevorzugt von 90 bis 130 °C, und weiter bevorzugt von 100 bis 120 °C. Dabei ist es unerheblich, in welcher Art und Weise das verwendete Diisocyanat erwärmt wird, sofern es zum Spülen des Kühlers geeignet ist. Bevorzugt wird das in (iv) verwendete Diisocyanat im Rührkessel, weiter bevorzugt gemäß (ii), erwärmt.

Hinsichtlich der Art und Weise, wie das in (iv) verwendete Diisocyanat zum Spülen eingebracht wird, besteht keine Einschränkung, sofern das Diisocyanat mit der zu entfernenden Substanz 1,3,5-Trimethylisocyanurat in Kontakt kommen und eine Spülfraktion gewonnen werden kann. Dabei ist es bevorzugt, dass der Rührkessel eine Öffnung im Boden aufweist, über die das Diisocyanat dem Rührkessel entnommen werden kann, um dieses dann zum Spülen zu verwenden. Dieser Vorgang kann beispielsweise über ein Ventil gesteuert werden. Weiter ist es bevorzugt, dass der Rührkessel eine Öffnung im Boden aufweist sowie eine Leitung mit einer Verbindung bzw. einem Auslass oberhalb des Kühlers, um das in (iv) verwendete Diisocyanat zum Spülen fördern zu können. Das Fördern selbst kann bevorzugt mittels einer Pumpe geschehen. Somit ist es besonders bevorzugt, dass das in (iv) verwendete Diisocyanat durch eine Öffnung im Boden des Rührkessels über eine Leitung mit Auslass oberhalb des Kühlers zum Spülen gefördert wird, bevorzugt über eine Pumpe.

Sofern das Verfahren die oben genannten weiteren Schritte (v), (vi) und (vii) umfasst, kann das Auskristallisieren in (v) in jeglicher dem Fachmann bekannten Art und Weise geschehen, beispielsweise durch Einengen der Spülfraktion durch Entfernen darin vorhandener Substanzen unterschiedlich zum 1,3,5-Trimethylisocyanurat oder durch Abkühlen der Spülfraktion. Bevorzugt ist das Auskristallisieren durch Abkühlen der Spülfraktion, wobei dies weiter bevorzugt durch Abkühlen der Spülfraktion auf eine Temperatur im Bereich von 0 bis 35 °C erfolgt, weiter bevorzugt von 5 bis 30 °C, weiter bevorzugt von 10 bis 25 °C, weiter bevorzugt von 15 bis 23 °C, weiter bevorzugt von 17 bis 22 °C, und weiter bevorzugt von 19 bis 21 °C.

Hinsichtlich der Art und Weise des Spülens in (iv) besteht keine Einschränkung, sofern durch das Spülen eine 1,3,5-Trimethylisocyanurat und Diisocyanat enthaltende Spülfraktion erhalten werden kann. Bevorzugt erfolgt das Spülen durch Verströmen des Diisocyanats über eine Düse oberhalb des Kühlers, bevorzugt über eine Brause.

Wie oben bereits offenbart, können die Verfahrensschritte (i), (ii) und (iii) ein oder mehrmals wiederholt werden bevor (iv) durchgeführt wird. Es ist bevorzugt, dass vor dem Spülen gemäß (iv), das Herstellen des Polycarbodiimids gemäß (i),(ii) und (iii) mindestens einmal wiederholt wird, bevorzugt werden (i),(ii) und (iii) 1 bis 50 Mal wiederholt, weiter bevorzugt 2 bis 30 Mal, weiter bevorzugt 3 bis 20 Mal, weiter bevorzugt 5 bis 15 Mal, und weiter bevorzugt 8 bis 12 Mal.

Somit kann ein möglichst vollständiges Entfernen von 1,3,5-Trimethylisocyanurat aus dem Kühler optimiert werden.

Hinsichtlich des Kühlers, der im Verfahren gemäß (iii) zum Abtrennen des Katalysators aus der in (ii) erhaltenen Produktmischung durch Destillation der Produktmischung unter Erhalt eines Sumpfprodukts und eines Destillats verwendet wird, besteht keine Einschränkung, sofern das Sumpfprodukt das Polycarbodiimid und einen Teil des Katalysators, und das Destillat Diisocyanat der Formel (I) und einen weiteren Teil des Katalysators enthält. Es ist bevorzugt, dass in (iv) ein Rohrbündelkühler als Kühler verwendet wird.

Sofern ein Rohrbündelkühler als Kühler verwendet wird, besteht hinsichtlich der Innendurchmesser der Rohre desselben keine Einschränkung. Es ist bevorzugt, dass die Rohre des Rohrbündelkühlers einen Innendurchmesser im Bereich von 5 bis 100 mm aufweisen, bevorzugt im Bereich von 10 bis 70 mm, weiter bevorzugt von 15 bis 50 mm, weiter bevorzugt von 20 bis 40 mm, und weiter bevorzugt von 25 bis 35 mm.

Sofern ein Rohrbündelkühler als Kühler verwendet wird, besteht auch hinsichtlich der Länge der Rohre des Rohrbündelkühlers keine Einschränkung. Es ist bevorzugt, dass die Rohre des Rohrbündelkühlers eine Rohrlänge im Bereich von 0,5 bis 10 m aufweisen, bevorzugt im Bereich von 1 bis 8 m, weiter bevorzugt von 1,5 bis 6 m, weiter bevorzugt von 2 bis 5 m, weiter bevorzugt von 2,5 bis 4,5 m, weiter bevorzugt von 3 bis 4 m, weiter bevorzugt von 3,3 bis 3,8 m.

Sofern ein Rohrbündelkühler als Kühler verwendet wird, besteht auch hinsichtlich der Anzahl an Rohren des Rohrbündelkühlers keine Einschränkung. Bevorzugt ist eine Anzahl an Rohren im Bereich von 5 bis 1.500, bevorzugt im Bereich von 10 bis 1.000, weiter bevorzugt von 20 bis 800, weiter bevorzugt von 50 bis 700, weiter bevorzugt von 100 bis 650, weiter bevorzugt von 150 bis 600, weiter bevorzugt von 200 bis 550, weiter bevorzugt von 250 bis 500, weiter bevorzugt von 300 bis 450, weiter bevorzugt von 350 bis 400.

Insbesondere ist es bevorzugt, das im Verfahren in (iv) ein Rohrbündelkühler als Kühler verwendet wird, wobei die Rohre des Rohrbündelkühlers bevorzugt einen Innendurchmesser im Bereich von 5 bis 100 mm aufweisen, weiter bevorzugt im Bereich von 10 bis 70 mm, weiter bevorzugt von 15 bis 50 mm, weiter bevorzugt von 20 bis 40 mm, und besonders bevorzugt von 25 bis 35 mm, und wobei die Rohre des Rohrbündelkühlers bevorzugt eine Rohrlänge im Bereich von 0,5 bis 10 m aufweisen, weiter bevorzugt im Bereich von 1 bis 8 m, weiter bevorzugt von 1,5 bis 6 m, weiter bevorzugt von 2 bis 5 m, weiter bevorzugt von 2,5 bis 4,5 m, weiter bevorzugt von 3 bis 4 m, besonders bevorzugt von 3,3 bis 3,8 m, und wobei die Anzahl an Rohren des Rohrbündelkühlers bevorzugt im Bereich von 5 bis 1.500 liegt, weiter bevorzugt im Bereich von 10 bis 1.000, weiter bevorzugt von 20 bis 800, weiter bevorzugt von 50 bis 700, weiter bevorzugt von 100 bis 650, weiter bevorzugt von 150 bis 600, weiter bevorzugt von 200 bis 550, weiter bevorzugt von 250 bis 500, weiter bevorzugt von 300 bis 450, und besonders bevorzugt von 350 bis 400. Besonders bevorzugt wird in (iv) ein Rohrbündelkühler als Kühler verwendet wird, wobei die Rohre des Rohrbündelkühlers einen Innendurchmesser im Bereich von 25 bis 35 mm aufweisen, und wobei die Rohre des Rohrbündelkühlers eine Rohrlänge im Bereich von 3,3 bis 3,8 m aufweisen, und wobei die Anzahl an Rohren des Rohrbündelkühlers im Bereich von 350 bis 400 liegt.

Hinsichtlich der Bedingungen, insbesondere hinsichtlich der zu erreichenden Temperatur, des anzuwendenden Drucks, und der gesamten Dauer für das Erhitzen oder der Dauer für das Erhitzen bei der zu erreichenden Temperatur, unter denen das Reaktionsgemisch in (ii) erhitzt wird, gibt es keine Einschränkung, sofern gemäß (ii) des Verfahrens das Polymerisieren des Diisocyanats zum Polycarbodiimid in einem Rührkessel durch Erhitzen des in (i) hergestellten Reaktionsgemisches unter Rühren auf eine Temperatur im Bereich von 20 bis 250°C bei einem Druck im Bereich von 20 bis 800 mbar stattfinden kann.

Hinsichtlich der Bedingungen unter denen das Reaktionsgemisch in (ii) erhitzt wird, ist es bevorzugt, dass in (ii) das Reaktionsgemisch auf eine zu erreichende Temperatur im Bereich von 40 bis 230 °C erhitzt wird, weiter bevorzugt von 60 bis 210 °C, weiter bevorzugt von 80 bis 200 °C, weiter bevorzugt von 100 bis 190 °C, weiter bevorzugt von 120 bis 180 °C, weiter bevorzugt von 130 bis 170 °C, weiter bevorzugt von 145 bis 155 °C, und besonders bevorzugt von 140 bis 160 °C.

Hinsichtlich der Bedingungen unter denen das Reaktionsgemisch in (ii) erhitzt wird, ist es weiterhin bevorzugt, dass in (ii) das Reaktionsgemisch bei einem Druck im Bereich von 50 bis 750 mbar erhitzt wird, bevorzugt von 100 bis 600 mbar, weiter bevorzugt von 150 bis 500 mbar, weiter bevorzugt von 200 bis 400 mbar, weiter bevorzugt von 250 bis 350 mbar, weiter bevorzugt von 270 bis 330 mbar, und weiter bevorzugt von 290 bis 310 mbar.

Hinsichtlich der Bedingungen unter denen das Reaktionsgemisch in (ii) erhitzt wird, ist es weiterhin bevorzugt, dass in (ii) das Reaktionsgemisch, bevorzugt bei der zu erreichenden Temperatur, für eine Dauer von 6 bis 96 h erhitzt wird, bevorzugt von 8 bis 72 h, weiter bevorzugt von 10 bis 48 h, weiter bevorzugt von 12 bis 36 h, weiter bevorzugt von 14 bis 30 h, weiter bevorzugt von 16 bis 24 h, und besonders bevorzugt von 18 bis 22 h.

Insbesondere ist es hinsichtlich der Bedingungen bevorzugt, dass in (ii) das Reaktionsgemisch auf eine Temperatur im Bereich von 40 bis 230 °C erhitzt wird, weiter bevorzugt von 60 bis 210 °C, weiter bevorzugt von 80 bis 200 °C, weiter bevorzugt von 100 bis 190 °C, weiter bevorzugt von 120 bis 180 °C, weiter bevorzugt von 130 bis 170 °C, weiter bevorzugt von 145 bis 155 °C, und besonders bevorzugt von 140 bis 160 °C, und dass in (ii) das Reaktionsgemisch bei einem Druck im Bereich von 50 bis 750 mbar erhitzt wird, bevorzugt von 100 bis 600 mbar, weiter bevorzugt von 150 bis 500 mbar, weiter bevorzugt von 200 bis 400 mbar, weiter bevorzugt von 250 bis 350 mbar, weiter bevorzugt von 270 bis 330 mbar, und weiter bevorzugt von 290 bis 310 mbar, und dass in (ii) das Reaktionsgemisch, bevorzugt bei der erreichenden Temperatur, für eine Dauer von 6 bis 96 h erhitzt wird, bevorzugt von 8 bis 72 h, weiter bevorzugt von 10 bis 48 h, weiter bevorzugt von 12 bis 36 h, weiter bevorzugt von 14 bis 30 h, weiter bevorzugt von 16 bis 24 h, und besonders bevorzugt von 18 bis 22 h. Besonders bevorzugt wird in (ii) das Reaktionsgemisch auf eine Temperatur im Bereich von 140 bis 160 °C bei einem Druck von 290 bis 310 mbar für eine Dauer von 18 bis 22 h, bevorzugt bei der zu erreichenden Temperatur von 140 bis 160 °C, erhitzt.

Hinsichtlich des durch den Kühler gemäß (iii) ermöglichten Kühlvorgangs besteht keine Einschränkung, sofern dieser geeignet ist, eine Abtrennung des Katalysators aus der in (ii) erhaltenen Produktmischung durch Destillation der Produktmischung zu ermöglichen unter Erhalt eines Sumpfprodukts und eines Destillats, wobei das Sumpfprodukt das Polycarbodiimid und einen Teil des Katalysators, und das Destillat Diisocyanat der Formel (I) und einen weiteren Teil des Katalysators enthält. Bevorzugt wird in (iii) durch den Kühler der verwendeten Destillationsvorrichtung das Destillat auf eine Temperatur im Bereich von 0 bis 35 °C abgekühlt, weiter bevorzugt von 5 bis 30 °C, weiter bevorzugt von 10 bis 25 °C, weiter bevorzugt von 15 bis 23 °C, weiter bevorzugt von 17 bis 22 °C, und besonders bevorzugt von 19 bis 21 °C.

Hinsichtlich der Menge an Katalysator in dem in (i) hergestellten Reaktionsgemisch besteht keine Einschränkung, sofern diese dazu geeignet ist ein Polymerisieren des Diisocyanats zum Polycarbodiimid gemäß (ii) zu ermöglichen. Bevorzugt liegt die Menge an Katalysator in dem in (i) hergestellten Reaktionsgemisch im Bereich von 0,01 bis 2 Gew.-% bezogen auf 100 Gew.-% Diisocyanat in dem Reaktionsgemisch, weiter bevorzugt von 0,05 bis 1 Gew.-%, weiter bevorzugt von 0,1 bis 0,5 Gew.-%, weiter bevorzugt von 0,15 bis 0,35 Gew.-%, weiter bevorzugt von 0,2 bis 0,3 Gew.-%, weiter bevorzugt von 0,22 bis 0,27 Gew.-%, und besonders bevorzugt von 0,23 bis 0,25 Gew.-%.

Hinsichtlich des Katalysators selbst, welcher der Herstellung des Reaktionsgemisches in (i) dient, besteht keine Einschränkung, sofern dieser zum Polymerisieren des Diisocyanats zum Polycarbodiimid gemäß (ii) geeignet ist. Bevorzugt enthält der Katalysator eine oder mehrere Organophosphorverbindungen, weiter bevorzugt eine oder mehrere Organophosphorverbindungen ausgewählt aus der Gruppe bestehend aus Phospholenen, Phospholenoxiden, Phospholidinen, Phospholinoxiden und Mischungen davon, weiter bevorzugt aus der Gruppe bestehend aus Diphenylphosphinsäure und Salzen davon, Bis-(2,4,-trimethylpentyl)-phosphinsäure, Tributylphosphan, Triisobutylphosphansulfid, Trialkylphosphanoxide, Triphenylphosphan, Tetraphenylphosphinbromid, Tetrabutylphosphinchlorid, Tetrabutylphosphinbromid, Bis(2,4,4-trimethylpentyl)-dithiophosphonsäure, Bis(2,4,4-trimethylpentyl)-monothiophosphonsäure, Phospholenoxiden, und Mischungen davon,
weiter bevorzugt aus der Gruppe bestehend aus Diphenylphosphinsäure und Salzen davon, Bis-(2,4,-trimethylpentyl)-phosphinsäure, Tributylphosphan, Triisobutylphosphansulfid, Trioctylphosphanoxid, Trihexylphosphanoxid, Triphenylphosphan, Tetraphenylphosphinbromid, Tetrabutylphosphinchlorid, Tetrabutylphosphinbromid, Bis(2,4,4-trimethylpentyl)-dithiophosphonsäure, Bis(2,4,4-trimethylpentyl)-monothiophosphonsäure, Phospholenoxiden, und Mischungen davon,
wobei weiter bevorzugt der Katalysator ein oder mehrere Phospholenoxide enthält, und besonders bevorzugt ein oder mehrere Phospholenoxide als Katalysator verwendet werden.

Sofern ein Phospholenoxid als Katalysator zur Herstellung des Reaktionsgemisches in (i) verwendet wird, besteht hinsichtlich desselben keine Einschränkung, sofern dieses zum Polymerisieren des Diisocyanats zum Polycarbodiimid gemäß (ii) geeignet ist. Bevorzugt enthält das Phospholenoxid ein oder mehrere Phospholenoxide der Formel (II) 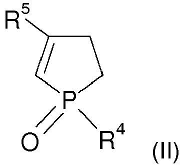 wobei R⁴ und R⁵ unabhängig voneinander für H oder für eine optional substituierte aliphatische C₁-C₁₅ Alkylgruppe, cycloaliphatische C₅-C₁₅ Alkylgruppe, C₆-C₁₅ Arylgruppe, C₇-C₁₅ Aralkylgruppe, oder C₇-C₁₅ Alkarylgruppe stehen, wobei R⁴ und R⁵ unabhängig voneinander bevorzugt für H oder eine C₁-C₁₀ Alkylgruppe stehen.

Sofern ein oder mehrere Phospholenoxide der Formel (II) als Katalysator zur Herstellung des Reaktionsgemisches in (i) verwendet werden, steht R⁴ bevorzugt für H, eine optional substituierte aliphatische C₁-C₁₀ Alkylgruppe oder für eine C₆-C₁₅ Arylgruppe, weiter bevorzugt für optional substituiertes Methyl, Ethyl, Propyl, Phenyl oder Benzyl, und besonders bevorzugt für Methyl oder Phenyl.

Sofern ein oder mehrere Phospholenoxide der Formel (II) als Katalysator zur Herstellung des Reaktionsgemisches in (i) verwendet werden, steht R⁵ bevorzugt für H oder eine optional substituierte aliphatische C₁-C₁₀ Alkylgruppe steht, weiter bevorzugt für H oder optional substituiertes Methyl, Ethyl, oder Propyl, und besonders bevorzugt für H oder Methyl.

Insbesondere ist es bevorzugt, dass, sofern ein oder mehrere Phospholenoxide der Formel (II) als Katalysator zur Herstellung des Reaktionsgemisches in (i) verwendet werden, das Phospholenoxid ausgewählt ist aus der Gruppe bestehend aus 3-Methyl-1-phenyl-2-phospholen-1-oxid, 1-Phenyl-2-phospholen-1-oxid, 1-Methyl-2-phospholen-1-oxid, 1,3-Dimethyl-2-phospholen-1-oxid, 1-Ethyl-3-methyl-2-phospholen-1-oxid, und Mischungen davon, wobei das Phospholenoxid bevorzugt 1-Methyl-2-phospholen-1-oxid enthält, wobei weiter bevorzugt das Phospholenoxid 1-Methyl-2-phospholen-1-oxid ist, und besonders bevorzugt 1-Methyl-2-phospholen-1-oxid als Katalysator verwendet wird.

Das Reaktionsgemisch, welches in (i) hergestellt wird und in (ii) eingesetzt wird, kann weitere Substanzen oder Verbindungen enthalten. Bevorzugt enthält das in (i) hergestellte und in (ii) eingesetzte Reaktionsgemisch ein Lösungsmittel, weiter bevorzugt ein Lösungsmittel ausgewählt aus der Gruppe bestehend aus aromatischen Kohlenwasserstoffen, Amiden, halogenierten Kohlenwasserstoffen, Ether, cyclischen Carbonaten, und Mischungen davon, und besonders bevorzugt aus der Gruppe bestehend aus Toluol, Xylol, N-Methylpyrrolidon, Dimethylformamid, Dimethylacetamid, Dichlormethan, Chloroform, Dichlorethan, Tetrachlorethan, Tetrahydrofuran, Ethylencarbonat, Propylencarbonat, und Mischungen davon.

Hinsichtlich des in (i) hergestellten und in (ii) eingesetzten Reaktionsgemischs ist es weiter bevorzugt, dass dieses außer dem einen oder den mehreren Diisocyanaten und dem Katalysator weniger als 10 Gew.-% weiterer Verbindungen enthält, weiter bevorzugt weniger als 5 Gew.-%, weiter bevorzugt weniger als 3 Gew.-%, weiter bevorzugt weniger als 1 Gew.-%, weiter bevorzugt weniger als 0,5 Gew.-%, weiter bevorzugt weniger als 0,1 Gew.-%, weiter bevorzugt weniger als 0,05 Gew.-%, und besonders bevorzugt weniger als 0,01 Gew.-%.

In (ii) des Verfahrens findet ein Polymerisieren des Diisocyanats zum Polycarbodiimid statt in einem Rührkessel durch Erhitzen des in (i) hergestellten Reaktionsgemisches unter Rühren auf eine Temperatur im Bereich von 20 bis 250°C bei einem Druck im Bereich von 20 bis 800 mbar. Dabei können Polycarbodiimide mit unterschiedlichem Polymerisationsgrad hergestellt werden, wobei der Polymerisationsgrad keiner Einschränkung unterliegt. Bevorzugt weist das in (ii) erhaltene Polycarbodiimid einen Polymerisationsgrad im Bereich von 1 bis 20 auf, weiter bevorzugt im Bereich von 2 bis 15, weiter bevorzugt von 3 bis 12, weiter bevorzugt von 3 bis 10, weiter bevorzugt 3 bis 8, weiter bevorzugt 3 bis 6, und besonders bevorzugt 3 bis 5.

Aus (ii) wird gemäß dem Verfahren eine Produktmischung erhalten, welche das Polycarbodiimiid enthält. Diese Produktmischung weist typischerweise charakteristische und mittels gängiger Messmethoden bestimmbare Eigenschaften auf, insbesondere einen NCO-Gehalt, wobei der NCO-Gehalt keiner Einschränkung unterliegt.

Bevorzugt wird der NCO-Gehalt der Produktmischung nach DIN EN 1242 bestimmt. Weiter ist es bevorzugt, dass die in (ii) erhaltene Produktmischung einen NCO-Gehalt im Bereich von 0,1 bis 25 % Gew.-% bezogen auf das Gewicht des Polycarbodiimids aufweist, weiter bevorzugt von 0,5 bis 23 Gew.-%, weiter bevorzugt von 1 bis 21 Gew.-%, weiter bevorzugt von 5 bis 19 Gew.-%, weiter bevorzugt von 8 bis 17 Gew.-%, weiter bevorzugt von 10 bis 15 Gew.-%, und besonders bevorzugt von 11 bis 13 Gew.-%.

Typischerweise wird die Reaktionsdauer in (ii), also insbesondere der Polymerisationsreaktion, angepasst an die zur Herstellung einer gewünschten Produktmischung benötigte Dauer, die durch Bestimmung des NCO-Gehalt der Produktmischung ermittelt werden kann. Vorliegend ist eine Reaktionsdauer in (ii) bevorzugt, die im Bereich von 6 bis 96 h liegt, weiter bevorzugt von 8 bis 72 h, weiter bevorzugt von 10 bis 48 h, weiter bevorzugt von 12 bis 36 h, weiter bevorzugt von 14 bis 30 h, weiter bevorzugt von 16 bis 24 h, und besonders bevorzugt von 18 bis 22 h.

Damit ist es insbesondere bevorzugt, dass der NCO-Gehalt der in (ii) erhaltenen Produktmischung einen NCO-Gehalt im Bereich von 0,1 bis 25 % Gew.-% bezogen auf das Gewicht des Polycarbodiimids aufweist, weiter bevorzugt von 0,5 bis 23 Gew.-%, weiter bevorzugt von 1 bis 21 Gew.-%, weiter bevorzugt von 5 bis 19 Gew.-%, weiter bevorzugt von 8 bis 17 Gew.-%, weiter bevorzugt von 10 bis 15 Gew.-%, und besonders bevorzugt von 11 bis 13 Gew.-%, und dies nach einer Reaktionsdauer in (ii) von 6 bis 96 h erreicht wird, bevorzugt von 8 bis 72 h, weiter bevorzugt von 10 bis 48 h, weiter bevorzugt von 12 bis 36 h, weiter bevorzugt von 14 bis 30 h, weiter bevorzugt von 16 bis 24 h, und weiter bevorzugt von 18 bis 22 h.

Bevorzugt wird der Farbindex der Polycarbodiimids nach DIN 6162 bestimmt. Weiter ist es bevorzugt, dass das erhaltene Polycarbodiimid einen Farbindex von 20 oder weniger aufweist, bevorzugt von 10 oder weniger, und besonders bevorzugt von 5 oder weniger.

Hinsichtlich der Prozessführung in (ii) des Verfahrens besteht keine Einschränkung. Es ist sowohl eine kontinuierliche wie auch batchweise Durchführung des Verfahrens denkbar. Es ist bevorzugt, dass (ii), also das Polymerisieren, chargenweise durchgeführt wird.

Das Polymerisieren findet gemäß (ii) durch Erhitzen des in (i) hergestellten Reaktionsgemisches unter Rühren auf eine Temperatur im Bereich von 20 bis 250°C bei einem Druck im Bereich von 20 bis 800 mbar statt. Je nach gewählten Bedingungen kann dabei eine Kühlung vorgesehen werden, um eine ressourcenschonende Rückführung beispielsweise von entweichendem gasförmigen Lösungsmittel oder anderer Verbindungen aus (ii) zu gewährleisten. Das Polymerisieren in (ii) wird somit weiter bevorzugt unter Rückflusskühlung durchgeführt.

Gemäß (iii) des Verfahrens wird der Katalysator aus der in (ii) erhaltenen Produktmischung durch Destillation der Produktmischung unter Erhalt eines Sumpfprodukts und eines Destillats abgetrennt, wobei das Sumpfprodukt das Polycarbodiimid und einen Teil des Katalysators, und das Destillat Diisocyanat der Formel (I) und einen weiteren Teil des Katalysators enthält.

Insbesondere um eine möglichst vollständige Abtrennung des Katalysators und der Produktmischung vom Reaktionsgemisch zu ermöglichen, kann das Verfahren in (iii) spezifische Ausführungsformen umfassen. So kann beispielsweise ein Schleppmittel als Zusatz- bzw. Hilfsstoff verwendet werden, welches bevorzugt mit der abzutrennenden Verbindung ein Azeotrop bildet, um durch die Destillation eine verbesserte Abtrennung zu erreichen. Entsprechend ist es bevorzugt, dass das Verfahren gemäß einer der zuvor genannten Ausführungsformen in (iii) die weiteren Schritte (iii.a), (iii.b) und (iii.c) umfasst, wobei in (iii.a) der Katalysator aus der in (ii) erhaltenen Produktmischung durch Destillation der Produktmischung unter Erhalt eines ersten Sumpfprodukts und eines ersten Destillats abgetrennt wird, wobei das erste Sumpfprodukt das Polycarbodiimid und einen Teil des Katalysators, und das erste Destillat Diisocyanat der Formel (I) und einen weiteren Teil des Katalysators enthält, wobei in (iii.b) ein Schleppmittel zu dem in (iii.a) erhaltenen ersten Sumpfprodukt unter Erhalt einer Mischung zugegeben wird, wobei das Schleppmittel einen niedrigeren Siedepunkt als das Polycarbodiimid hat, und wobei in (iii.c) der Katalysator aus der in (iii.b) erhaltenen Mischung durch Destillation der Mischung unter Erhalt eines zweiten Sumpfprodukts und eines zweiten Destillats abgetrennt wird, wobei das zweite Sumpfprodukt das Polycarbodiimid und einen Teil des Katalysators, und das zweite Destillat Diisocyanat der Formel (I) und einen weiteren Teil des Katalysators und das Schleppmittel enthält.

Hinsichtlich des Schleppmittels selbst sowie dessen Eigenschaften, insbesondere dessen Siedepunkts unter Normalbedingungen, besteht keine Einschränkung, sofern dieses zur Abtrennung in (iii) oder (iii.a) geeignet ist. Es ist bevorzugt, dass das Schleppmittel einen Siedepunkt im Bereich von 150 bis 350°C aufweist. Weiter ist es bevorzugt, dass das Schleppmittel keine Amingruppe -NH- und/oder -OH Gruppe und/oder -SH Gruppe und/oder - COOH Gruppe aufweist. Es ist insbesondere bevorzugt, dass das Schleppmittel ein Diisocyanat enthält, bevorzugt ein Diisocyanat der Formel (I), wobei weiter bevorzugt das Schleppmittel aus einem oder mehreren Diisocyanaten besteht, wobei weiter bevorzugt das Schleppmittel aus Diisocyanat der Formel (I) besteht.

Hinsichtlich der oben genannten weiteren Verfahrungsschritte (iii.a) und (iii.c) zum Verfahren bestehen keine Einschränkungen mit Blick auf die anzuwendenden Bedingungen, insbesondere hinsichtlich der Temperatur und des Drucks, sofern ein Abtrennen gemäß (iii) oder (iii.a) ermöglicht bzw. verbessert werden kann. Es ist bevorzugt, dass die Destillation in (iii.a) und/oder (iii.c), bevorzugt in (iii.a) und (iii.c), bei einer Temperatur im Bereich von 100 bis 400 °C durchgeführt wird, bevorzugt von 130 bis 350 °C, und weiter bevorzugt von 150 bis 250 °C. Weiter ist es bevorzugt, dass die Destillation in (iii.a) und/oder (iii.c), bevorzugt in (iii.a) und (iii.c), bei einem Druck im Bereich von 0.1 bis 800 mbar durchgeführt wird, bevorzugt von 0.1 bis 500 mbar, und weiter bevorzugt von 0.1 bis 300 mbar. Somit ist es insbesondere bevorzugt, dass die Destillation in (iii.a) und/oder (iii.c), bevorzugt in (iii.a) und (iii.c), bei einer Temperatur im Bereich von 100 bis 400 °C, bevorzugt von 130 bis 350 °C, und weiter bevorzugt von 150 bis 250 °C, und bei einem Druck im Bereich von 0.1 bis 800 mbar, bevorzugt von 0.1 bis 500 mbar, und weiter bevorzugt von 0.1 bis 300 mbar, durchgeführt wird. Besonders bevorzugt wird die Destillation in (iii.a) und/oder (iii.c), bevorzugt in (iii.a) und (iii.c), bei einer Temperatur im Bereich von 150 bis 250 °C, und bei einem Druck im Bereich von 0.1 bis 300 mbar durchgeführt.

Die genannten weiteren Verfahrensschritte (iii.b) und (iii.c) können wiederholt werden, um eine möglichst vollständige Abtrennung in (iii.c) zu ermöglichen bzw. zu verbessern. Es ist bevorzugt, dass (iii.b) und (iii.c) wiederholt werden, bevorzugt werden (iii.b) und (iii.c) 1 bis 10 Mal wiederholt, weiter bevorzugt 1 bis 7 Mal, weiter bevorzugt 1 bis 5 Mal, weiter bevorzugt 1 bis 4 Mal, weiter bevorzugt 1 bis 3 Mal, weiter bevorzugt 1 bis 2 Mal, und weiter bevorzugt werden (iii.b) und (iii.c) ein Mal wiederholt.

Wie oben bereits beschrieben, wird in (iii) der Katalysator aus der in (ii) erhaltenen Produktmischung durch Destillation der Produktmischung unter Erhalt eines Sumpfprodukts und eines Destillats abgetrennt, wobei das Sumpfprodukt das Polycarbodiimid und einen Teil des Katalysators, und das Destillat Diisocyanat der Formel (I) und einen weiteren Teil des Katalysators enthält. Dabei wird das Destillat mittels des Kühlers abgekühlt, wobei keine Einschränkung besteht hinsichtlich der Temperatur auf die abgekühlt wird. Es ist bevorzugt, dass in (iii.a) und/oder in (iii.c), bevorzugt in (iii.a) und (iii.c), der Kühler der verwendeten Destillationsvorrichtung das Destillat auf eine Temperatur im Bereich von 0 bis 35 °C abkühlt, weiter bevorzugt von 5 bis 30 °C, weiter bevorzugt von 10 bis 25 °C, weiter bevorzugt von 15 bis 23 °C, weiter bevorzugt von 17 bis 22 °C, und weiter bevorzugt von 19 bis 21 °C. Insbesondere um ein ressourcenschonendes Verfahren zu ermöglichen, ist es weiterhin bevorzugt, zusätzlich zu den weiteren Verfahrensschritten (iii.a), (iii.b) und (iii.c) einen Schritt (iii.d) durchzuführen, welcher sich an (iii.c) anschließt, wobei in (iii.d) zumindest ein Teil der erhaltenen ersten und/oder zweiten Destillate in (i), bevorzugt des ganzen erhaltenen ersten und/oder zweiten Destillats in (i) für das Herstellen des Reaktionsgemisches rückgeführt werden.

Sofern die weiteren Verfahrensschritte (iii.a), (iii.b) und (iii.c) durchgeführt werden, ist es weiter bevorzugt, dass das Diisocyanat enthaltende Destillat aus (iii.a) und/oder (iii.c), bevorzugt aus (iii.a) und (iii.c), weiter bevorzugt aus (iii.c) zum Spülen in (iv) verwendet wird. Wie oben detailliert beschrieben betrifft das erfindungsgemäße Verfahren die Herstellung von Polycarbodiimiden. Weiterhin kann das gewonnene Polycarbodiimid im Ermessen des Fachmanns aber auch noch weiter umgesetzt werden. Das gemäß dem vorliegenden Verfahren gewonnene Polycarbodiimid kann beispielsweise als Ausgangsstoff zur Synthese weiterer Substanzen verwendet werden, zum Beispiel in der organischen Synthese. Es ist bevorzugt, das Polycarbodiimid mit einer Verbindung ausgewählt aus der Gruppe bestehend aus Monoolen, also einwertigen Alkoholen umfassend eine alkoholische Hydroxygruppe, Diolen, Polyoxyalkylenolen, Monoaminen und Mischungen davon weiter umzusetzen, bevorzugt aus der Gruppe bestehend aus Monoolen, Diolen, Polyethylenglycolen, Polypropylenglycolen, Monoaminen und Mischungen davon.

Schließlich werden auch Zusammensetzungen (nicht Teil der Erfindung) beschrieben, welche das aus dem zuvor beschriebenen Verfahren gewonnene Polycarbodiimid enthalten. Einfache Fälle einer solchen Zusammensetzung stellen bereits die in (iii), (iii.a) oder (iii.c) gewonnenen Sumpfprodukte dar. Schließlich wird also auch eine Polycarbodiimidzusammensetzung erhältlich und/oder erhalten nach einem Verfahren gemäß einer der oben beschriebenen Ausführungsformen (nicht Teil der Erfindung) beschrieben.

Wie oben bereits beschrieben, weisen Polycarbodiimide typischerweise charakteristische und mittels gängiger Messmethoden bestimmbare Eigenschaften auf, insbesondere einen NCO-Gehalt und einen Farbindex, wobei vorliegend weder der NCO-Gehalt noch der Farbindex der Polycarbodiimidzusammensetzung einer Einschränkung unterliegt.

Bevorzugt wird der NCO-Gehalt der Polycarbodiimidzusammensetzung nach DIN EN 1242 bestimmt. Weiter ist es bevorzugt, dass die Polycarbodiimidzusammensetzung einen NCO-Gehalt im Bereich von 0,1 bis 25 % Gew.-% bezogen auf das Gewicht der Polycarbodiimidzusammensetzung aufweist, weiter bevorzugt von 0,5 bis 23 Gew.-%, weiter bevorzugt von 1 bis 21 Gew.-%, weiter bevorzugt von 5 bis 19 Gew.-%, weiter bevorzugt von 8 bis 17 Gew.-%, weiter bevorzugt von 10 bis 15 Gew.-%, und besonders bevorzugt von 11 bis 13 Gew.-%.

Bevorzugt wird der Farbindex der Polycarbodiimidzusammensetzung nach DIN 6162 bestimmt.

Weiter ist es bevorzugt, dass die Polycarbodiimidzusammensetzung einen Farbindex von 20 oder weniger aufweist, bevorzugt von 10 oder weniger, und besonders bevorzugt von 5 oder weniger.

### BEISPIEL

In einem Rührreaktor von 6 m³ Volumen mit nachgeschalteter Destillationsvorrichtung, bestehend aus absteigendem Rohrbündelkühler (372 Rohre des Durchmessers 30 mm mit einer Länge von 3500 mm) und Destillatauffangbehälter, wurden 10 bis 20 Ansätzen zur Herstellung von Polycarbodiimiden gefahren. Dabei verstopften die Rohre des Rohrbündelkühlers zunehmend aufgrund des Auskristallisierens des aus dem Rohstoff stammenden Nebenprodukts 1,3,5-Trimethylisocyanurat. Als die Verstopfung des Rohrbündelkühlers ein Ausmaß erreicht hat, das eine Reinigung erforderlich gemacht hätte, wurde der Rührreaktor nach dessen Entleerung mit 2000 kg 1,3-Bis(1-isocyanato-1-methyl-ethyl)benzol (TMXDI) befüllt, das auf 120 °C erwärmt wurde. Das warme TMXDI wurde dann innerhalb von ca. 10-20 min über den weitgehend verstopften Kühler geleitet. Hiernach war die Verstopfung beseitigt. Nach Abkühlen des Destillats, und erneutem Auskristallisieren des 1,3,5-Trimethylisocyanurats, konnte das TMXDI für die Herstellung von Polycarbodiimiden im nächsten Reaktionsansatz zurückgewonnen werden.

### Zitierter Stand der Technik:

- EP 0 628 541 A1
- WO 2014/044743 A1

## Patentansprüche

1. Verfahren zur Herstellung von Polycarbodiimiden umfassend
(i) Herstellen eines Reaktionsgemisches umfassend einen Katalysator und ein Diisocyanat der Formel (I) 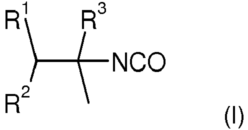 wobei unabhängig voneinander R¹, R² und R³ für H oder einen organischen Rest und einer von R¹, R² und R³ für einen Isocyanat-haltigen Rest R-NCO steht, wobei R für einen organischen Rest steht,
(ii) Polymerisieren des Diisocyanats zum Polycarbodiimid in einem Rührkessel durch Erhitzen des in (i) hergestellten Reaktionsgemisches unter Rühren auf eine Temperatur im Bereich von 20 bis 250°C bei einem Druck im Bereich von 20 bis 800 mbar, und
(iii) Abtrennen des Katalysators aus der in (ii) erhaltenen Produktmischung durch Destillation der Produktmischung unter Erhalt eines Sumpfprodukts und eines Destillats, wobei das Sumpfprodukt das Polycarbodiimid und einen Teil des Katalysators, und das Destillat Diisocyanat der Formel (I) und einen weiteren Teil des Katalysators enthält, **dadurch gekennzeichnet, dass** das Nebenprodukt 1,3,5-Trimethylisocyanurat, welches im Kühler der verwendeten Destillationsvorrichtung auskristallisiert, aus dem Kühler entfernt wird durch
(iv) Spülen des Kühlers der Destillationsvorrichtung mit Diisocyanat der Formel (I) unter Erhalt einer 1,3,5-Trimethylisocyanurat und Diisocyanat enthaltenden Spülfraktion.

2. Verfahren gemäß Anspruch 1, wobei das Diisocyanat in (i) und/oder in (iv) (1,3-Bis(1-isocyanato-1-methyl-ethyl)benzol ist.

3. Verfahren gemäß Anspruch 1 oder 2, wobei das Diisocyanat enthaltende Destillat aus (iii) zum Spülen in (iv) verwendet wird.

4. Verfahren gemäß einem der Ansprüche 1 bis 3, wobei in (iv) der Kühler der Destillationsvorrichtung mit Diisocyanat für eine Dauer von 0,5 min bis 2 h gespült wird.

5. Verfahren gemäß einem der Ansprüche 1 bis 4, wobei das Verfahren weiter umfasst
(v) Auskristallisieren des 1,3,5-Trimethylisocyanurat aus der in (iv) erhaltenen Spülfraktion,
(vi) Abtrennen des in (v) erhaltenen Feststoffs durch Dekantieren und/oder Filtrieren unter Erhalt des in (iv) verwendeten Diisocyanats,
(vii) Rückführen zumindest eines Teils des in (vi) erhaltenen Diisocyanats in (i) für das Herstellen des Reaktionsgemisches.

6. Verfahren gemäß einem der Ansprüche 1 bis 5, wobei das in (iv) verwendete Diisocyanat zu Beginn des Spülens des Kühlers eine Temperatur von 20 bis 250 °C aufweist.

7. Verfahren gemäß Anspruch 6, wobei das in (iv) verwendete Diisocyanat durch eine Öffnung im Boden des Rührkessels über eine Leitung mit Auslass oberhalb des Kühlers zum Spülen gefördert wird.

8. Verfahren gemäß einem der Ansprüche 1 bis 7, wobei in (iv) das Spülen durch Verströmen des Diisocyanats über eine Düse oberhalb des Kühlers durchgeführt wird.

9. Verfahren gemäß einem der Ansprüche 1 bis 8, wobei in (iv) ein Rohrbündelkühler als Kühler verwendet wird.

10. Verfahren gemäß einem der Ansprüche 1 bis 9, wobei in (ii) das Reaktionsgemisch auf eine Temperatur im Bereich von 40 bis 230 °C erhitzt wird.

11. Verfahren gemäß einem der Ansprüche 1 bis 10, wobei in (ii) das Reaktionsgemisch bei einem Druck im Bereich von 50 bis 750 mbar erhitzt wird.

12. Verfahren gemäß einem der Ansprüche 1 bis 11, wobei der Katalysator eine oder mehrere Organophosphorverbindungen enthält.

13. Verfahren gemäß Anspruch 12, wobei die eine oder mehreren Organophosphorverbindungen ein oder mehrere Phospholenoxide der Formel (II) enthalten 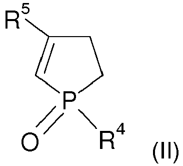 wobei R⁴ und R⁵ unabhängig voneinander für H oder für eine optional substituierte aliphatische C₁-C₁₅ Alkylgruppe, cycloaliphatische C₅-C₁₅ Alkylgruppe, C₆-C₁₅ Arylgruppe, C₇-C₁₅ Aralkylgruppe, oder C₇-C₁₅ Alkarylgruppe stehen.

14. Verfahren gemäß einem der Ansprüche 1 bis 13, wobei (iii) umfasst
(iii.a) Abtrennen des Katalysators aus der in (ii) erhaltenen Produktmischung durch Destillation der Produktmischung unter Erhalt eines ersten Sumpfprodukts und eines ersten Destillats, wobei das erste Sumpfprodukt das Polycarbodiimid und einen Teil des Katalysators, und das erste Destillat Diisocyanat der Formel (I) und einen weiteren Teil des Katalysators enthält,
(iii.b) Zugabe eines Schleppmittels zu dem in (iii.a) erhaltenen ersten Sumpfprodukt unter Erhalt einer Mischung, wobei das Schleppmittel einen niedrigeren Siedepunkt als das Polycarbodiimid hat,
(iii.c) Abtrennen des Katalysators aus der in (iii.b) erhaltenen Mischung durch Destillation der Mischung unter Erhalt eines zweiten Sumpfprodukts und eines zweiten Destillats, wobei das zweite Sumpfprodukt das Polycarbodiimid und einen Teil des Katalysators, und das zweite Destillat Diisocyanat der Formel (I) und einen weiteren Teil des Katalysators und das Schleppmittel enthält.

15. Verfahren gemäß einem der Ansprüche 1 bis 14, wobei das Schleppmittel ein Diisocyanat enthält.

## Claims

1. A process for preparing polycarbodiimides, comprising
(i) preparing a reaction mixture comprising a catalyst and a diisocyanate of the formula (I) 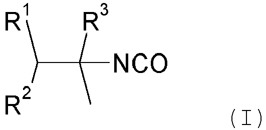 where R¹, R² and R³ are independently H or an organic radical and one of R¹, R² and R³ is an isocyanate-containing radical R-NCO where R is an organic radical,
(ii) polymerizing the diisocyanate to give the polycarbodiimide in a stirred tank by heating the reaction mixture prepared in (i) with stirring to a temperature in the range from 20 to 250°C at a pressure in the range from 20 to 800 mbar, and
(iii) separating the catalyst from the product mixture obtained in (ii) by distilling the product mixture to obtain a bottom product and a distillate, where the bottom product comprises the polycarbodiimide and a portion of the catalyst, and the distillate comprises diisocyanate of the formula (I) and a further portion of the catalyst,
wherein the 1,3,5-trimethyl isocyanurate by-product which crystallizes out in the cooler of the distillation apparatus used is removed from the cooler by
(iv) purging the cooler of the distillation apparatus with diisocyanate of the formula (I) to obtain a purge fraction comprising 1,3,5-trimethyl isocyanurate and diisocyanate.

2. The process according to claim 1, wherein the diisocyanate in (i) and/or in (iv) is 1,3-bis(1-isocyanato-1-methylethyl)benzene.

3. The process according to claim 1 or 2, wherein the diisocyanate-containing distillate from (iii) is used for purging in (iv).

4. The process according to any of claims 1 to 3, wherein, in (iv), the cooler of the distillation apparatus is purged with diisocyanate for a period of 0.5 min to 2 h.

5. The process according to any of claims 1 to 4, wherein the process further comprises
(v) crystallizing the 1,3,5-trimethyl isocyanurate out of the purge fraction obtained in (iv),
(vi) removing the solids obtained in (v) by decanting and/or filtering to obtain the diisocyanate used in (iv),
(vii) recycling at least a portion of the diisocyanate obtained in (vi) into (i) for the preparing of the reaction mixture.

6. The process according to any of claims 1 to 5, wherein the diisocyanate used in (iv) at the start of the purging of the cooler has a temperature of 20 to 250°C.

7. The process according to claim 6, wherein the diisocyanate used in (iv) is conveyed through an opening in the base of the stirred tank via a conduit having an outlet above the cooler for purging.

8. The process according to any of claims 1 to 7, wherein, in (iv), the purging is conducted by flowing the diisocyanate through a nozzle above the cooler.

9. The process according to any of claims 1 to 8, wherein, in (iv), a shell and tube cooler is used as cooler.

10. The process according to any of claims 1 to 9, wherein, in (ii), the reaction mixture is heated to a temperature in the range from 40 to 230°C.

11. The process according to any of claims 1 to 10, wherein, in (ii), the reaction mixture is heated at a pressure in the range from 50 to 750 mbar.

12. The process according to any of claims 1 to 11, wherein the catalyst comprises one or more organophosphorus compounds.

13. The process according to claim 12, wherein the one or more organophosphorus compounds comprise one or more phospholene oxides of the formula (II) 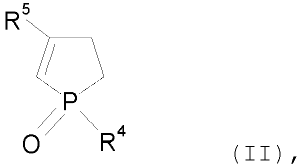 where R⁴ and R⁵ are independently H or an optionally substituted aliphatic C₁-C₁₅ alkyl group, cycloaliphatic C₅-C₁₅ alkyl group, C₆-C₁₅ aryl group, C₇-C₁₅ aralkyl group, or C₇-C₁₅ alkaryl group.

14. The process according to any of claims 1 to 13, wherein (iii) comprises
(iii.a) separating the catalyst from the product mixture obtained in (ii) by distilling the product mixture to obtain a first bottom product and a first distillate, where the first bottom product comprises the polycarbodiimide and a portion of the catalyst, and the first distillate comprises diisocyanate of the formula (I) and a further portion of the catalyst,
(iii.b) adding an entraining agent to the first bottom product obtained in (iii.a) to obtain a mixture, where the entraining agent has a lower boiling point than the polycarbodiimide,
(iii.c) separating the catalyst from the mixture obtained in (iii.b) by distilling the mixture to obtain a second bottom product and a second distillate, where the second bottom product comprises the polycarbodiimide and a portion of the catalyst, and the second distillate comprises diisocyanate of the formula (I) and a further portion of the catalyst and the entraining agent.

15. The process according to any of claims 1 to 14, wherein the entraining agent comprises a diisocyanate.

## Revendications

1. Procédé de préparation de polycarbodiimides, comprenant
(i) la préparation d'un mélange réactionnel comprenant un catalyseur et un diisocyanate de formule (I) 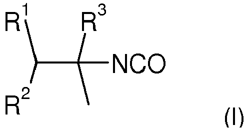 dans laquelle, indépendamment les uns des autres, R¹, R² et R³ représentent H ou un radical organique et l'un des radicaux R¹, R² et R³ représente un radical R-NCO contenant isocyanate, R représentant un radical organique,
(ii) la polymérisation du diisocyanate en polycarbodiimide dans une cuve agitée par chauffage du mélange réactionnel préparé dans (i) sous agitation à une température dans la plage de 20 à 250°C à une pression dans la plage de 20 à 800 mbars et
(iii) la séparation du catalyseur à partir du mélange de produits obtenu dans (ii) par distillation du mélange de produits avec obtention d'un produit de fond et d'un distillat, le produit de fond contenant le polycarbodiimide et une partie du catalyseur et le distillat contenant le diisocyanate de formule (I) et une autre partie du catalyseur,
**caractérisé en ce que** le produit secondaire isocyanurate de 1,3,5-triméthyle, qui se sépare par cristallisation dans le refroidisseur du dispositif de distillation utilisé, est éliminé du refroidisseur par
(iv) le rinçage du refroidisseur du dispositif de distillation par du diisocyanate de formule (I) avec obtention d'une fraction de rinçage contenant de l'isocyanurate de 1,3,5-triméthyle et du diisocyanate.

2. Procédé selon la revendication 1, le diisocyanate dans (i) et/ou dans (iv) étant du 1,3-bis(1-isocyanato-1-méthyléthyl) benzène.

3. Procédé selon la revendication 1 ou 2, le distillat contenant du diisocyanate de (iii) étant utilisé pour le rinçage dans (iv).

4. Procédé selon l'une quelconque des revendications 1 à 3, le refroidisseur du dispositif de distillation dans (iv) étant rincé avec du diisocyanate pendant une durée de 0,5 min à 2 h.

5. Procédé selon l'une quelconque des revendications 1 à 4, le procédé comprenant en outre
(v) la séparation par cristallisation de l'isocyanurate de 1,3,5-triméthyle de la fraction de rinçage obtenue dans (iv),
(vi) la séparation du solide obtenu dans (v) par décantation et/ou filtration avec obtention du diisocyanate utilisé dans (iv),
(vii) le recyclage d'au moins une partie du diisocyanate obtenu dans (vi) dans (i) pour la préparation du mélange réactionnel.

6. Procédé selon l'une quelconque des revendications 1 à 5, le diisocyanate utilisé dans (iv) présentant, au début du rinçage du refroidisseur, une température de 20 à 250°C.

7. Procédé selon la revendication 6, le diisocyanate utilisé dans (iv) étant transporté à travers une ouverture dans le fond de la cuve agitée par l'intermédiaire d'une conduite pourvue d'une sortie au-dessus du refroidisseur vers le rinçage.

8. Procédé selon l'une quelconque des revendications 1 à 7, le rinçage dans (iv) étant réalisé par dégagement du diisocyanate par l'intermédiaire d'un gicleur au-dessus du refroidisseur.

9. Procédé selon l'une quelconque des revendications 1 à 8, un refroidisseur à faisceau tubulaire étant utilisé dans (iv) comme refroidisseur.

10. Procédé selon l'une quelconque des revendications 1 à 9, le mélange réactionnel étant chauffé dans (ii) à une température dans la plage de 40 à 230°C.

11. Procédé selon l'une quelconque des revendications 1 à 10, le mélange réactionnel étant chauffé dans (ii) à une pression dans la plage de 50 à 750 mbars.

12. Procédé selon l'une quelconque des revendications 1 à 11, le catalyseur contenant un ou plusieurs composés organophosphorés.

13. Procédé selon la revendication 12, ledit un ou lesdits plusieurs composés organophosphorés contenant un ou plusieurs oxydes de phospholène de formule (II) 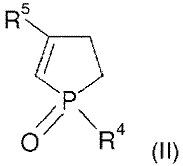 dans laquelle R⁴ et R⁵ représentent, indépendamment l'un de l'autre, H ou un groupe C₁-C₁₅-alkyle aliphatique éventuellement substitué, un groupe C₅-C₁₅-alkyle cycloaliphatique, un groupe C₆-C₁₅-aryle, un groupe C₇-C₁₅-aralkyle ou un groupe C₇-C₁₅-alkaryle.

14. Procédé l'une quelconque des revendications 1 à 13, (iii) comprenant
(iii.a) la séparation du catalyseur à partir du mélange de produits obtenu dans (ii) par distillation du mélange de produits avec obtention d'un premier produit de fond et d'un premier distillat, le premier produit de fond contenant le polycarbodiimide et une partie du catalyseur et le premier distillat contenant le diisocyanate de formule (I) et une autre partie du catalyseur,
(iii.b) addition d'un agent d'entraînement au premier produit de fond obtenu dans (iii.a) avec obtention d'un mélange, d'agent d'entraînement présentant un point d'ébullition inférieur à celui du polycarbodiimide,
(iii.c) la séparation du catalyseur à partir du mélange obtenu dans (iii.b) par distillation du mélange avec obtention d'un deuxième produit de fond et d'un deuxième distillat, le deuxième produit de fond contenant le polycarbodiimide et une partie du catalyseur et le deuxième distillat contenant le diisocyanate de formule (I) et une autre partie du catalyseur et d'agent d'entraînement.

15. Procédé selon d'une quelconque des revendications 1 à 14, l'agent d'entraînement contenant un diisocyanate.
